# FASCICULE DE BREVET EUROPEEN

(11) **EP 0 632 948 B1**
(45) Date de publication et mention de la délivrance du brevet: **28.07.1999**
(21) Numéro de dépôt: 94905152.8
(22) Date de dépôt: 25.01.1994
(51) Int. Cl.: H04N 5/44, H04N 5/76

(54) **RECEPTEUR DE TELEVISION A MEMOIRE TAMPON**
FERNSEHEMPFANGER MIT PUFFERSPEICHER
TELEVISION SET WITH A BUFFER MEMORY

(30) Priorité: 26.01.1993 FR 9300728
(43) Date de publication de la demande: 11.01.1995
(73) Titulaire: THOMSON multimedia, 92648 Boulogne Cédex (FR)
(72) Inventeur: STARON, Alain Thomson-CSF SCPI, F-92402 Courbevoie Cédex (FR)
(74) Mandataire: Ruellan-Lemonnier, Brigitte
(86) Numéro de dépôt international: FR9400087
(87) Numéro de publication internationale: WO9417626

(56) Documents cités:
- EP-A- 0 279 549
- GB-A- 2 222 742
- US-A- 5 134 499
- IEEE TRANSACTIONS ON COMMUNICATIONS vol. 26, no. 5 , Mai 1978 , NEW YORK US pages 594 - 600 JOHNSTON ET AL. 'A Digital Television Sequence Store'
- SYMPOSIUM RECORD, BROADCAST SESSIONS; 16TH INTERNATIONAL TV SYMPOSIUM, 17 Juin 1989 , MONTREUX, CH pages 289 - 295 WOODHAM 'A Solid State "Action Replay" Recorder'

## Description

La présente invention se rapporte aux récepteurs de télévision. Lorsqu'on visualise sur l'écran d'un récepteur de télévision une séquence d'images animées, les signaux reçus sont directement appliqués aux moyens de visualisation. De ce fait, le téléspectateur est prisonnier du déroulement du programme reçu et s'il veut intervenir sur ce déroulement, il ne peut que changer de programme. Lors de l'utilisation d'un magnétoscope, il est possible de relire un passage du programme enregistré sur la bande magnétique ou de sauter un passage jugé sans intérêt. Ces fonctions sont obtenues par une modification des conditions de défilement de la bande magnétique face aux têtes magnétiques. Lorsqu'on ne désire pas mettre en oeuvre un magnétoscope pour obtenir ces fonctions, il est nécessaire de prévoir à l'intérieur du téléviseur des moyens permettant de différer dans le temps la lecture des images constituant le signal reçu. En effet, la relecture d'un passage suppose que son contenu soit conservé un certain temps dans le récepteur et le saut d'un passage n'est concevable que comme la réduction d'un traitement en différé des signaux provenant du syntonisateur ou de la prise de péritélévision. On voit donc que le téléviseur doit être équipé d'une mémoire tampon capable d'emmagasiner un grand nombre d'images et d' une commande d'adressage permettant la simulation d'un saut dans le temps portant sur un groupe d'images et la récupération automatique imperceptible des conditions de lecture préexistantes.

GB-A-2 222 742 divulgue un récepteur de télévision comprenant des moyens d'obtention d'un signal source représentatif d'une séquence d'images animées et des moyens d'affichage permettant la visualisation de ladite séquence, comportant des moyens internes permettant d'appliquer en différé ledit signal source auxdits moyens d'affichage; ledit différé subissant un changement brusque de valeur à la demande ; ledit différé étant produit par une mémoire tampon ayant une contenance de plusieurs images.

L'invention est telle que revendiquée dans la revendication 1 concernant un récepteur de télévision et telle que revendiquée dans la revendication indépendante 8 concernant un procédé de transmission en différé dans un récepteur de télévision.

L'invention sera mieux comprise au moyen de la description ci-après et des figures annexées, parmi lesquelles:

La figure 1 schématise les moyens internes d'un récepteur de télévision selon l'invention et leur application à la fonction qui permet l'escamotage d'un groupe d'images.

La figure 2 représente les moyens de la figure 1 appliqués à la fonction relecture

La figure 3 est un schéma de récepteur de télévision équipé d'une mémoire tampon et de moyens de compression-décompression des images à charger et à extraire de ladite mémoire.

La figure 4 est un organigramme précisant les modalités de fonctionnement d'un système de gestion des adresses de la mémoire tampon illustrée dans les figures qui précèdent.

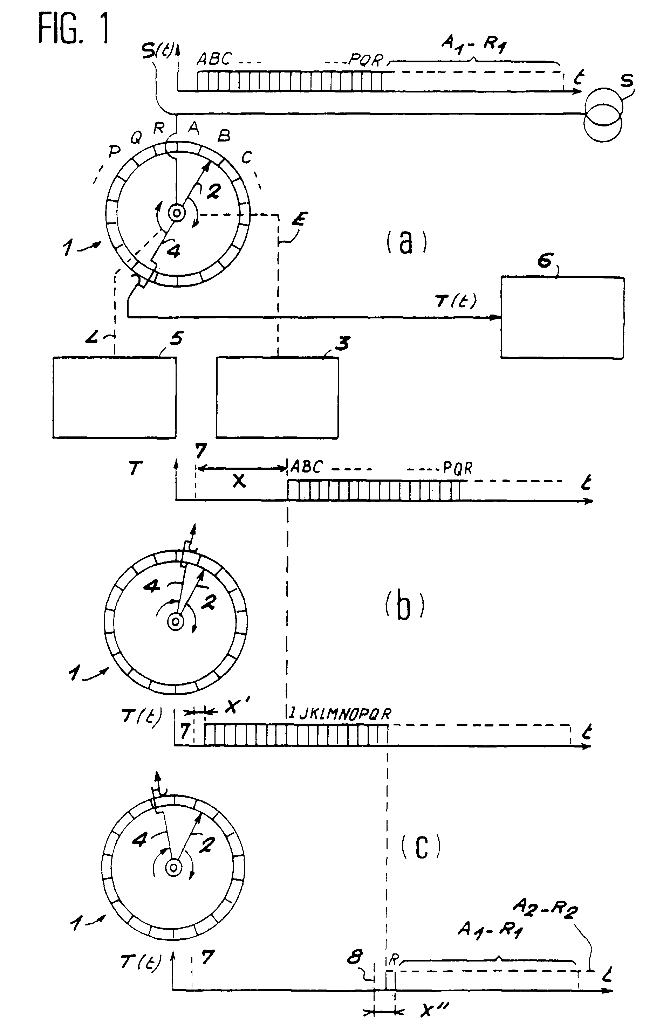

Sur la figure 1, on peut voir en (a) une mémoire 1 capable d'emmagasiner une séquence d'images animées provenant d'une source S. Cette mémoire comporte N zones affectées au stockage des images A,B,C,....PQR et pour mieux illustrer le fonctionnement cyclique, ces zones sont disposées en boucle fermée. Le signal S(t) à incrire dans la mémoire 1 comporte une suite de N images A,B,C,....,PQR, suivie par une autre suite A₁-R₁. Pour symboliser la fonction écriture, on a représenté un bras 2 qui assure le chargement du signal S(t) dans les zones de la mémoire 1. Ce bras tourne dans le sens des aiguilles d'une montre en adressant une nouvelle zone à chaque nouvelle image. La commande du bras 2 dépend d'une adresse de zone fournie via une ligne d'écriture E par un circuit 3 d'adressage en écriture. Sur la figure 1, en (a), on a supposé que la séquence A,B,C,....,P,Q,R a commencé à être chargée lorsque le bras 2 était pointé vers le haut, l'instant précis du début de ce chargement étant noté 7 sur les diagrammes temps de la figure 1. La lecture de la mémoire 1 est symbolisée par un autre bras 4 tournant aussi dans le sens des aiguilles d'une montre, mais qui retarde par rapport au bras 2. Sur la figure 1, en (a) le décalage est d'un demi tour. L'adressage en lecture est symbolisé par une ligne L reliée à un circuit 5 d'adressage en lecture. La lecture donne naissance à un signal T(t) qui est une séquence d'images A,B,C,....,P,Q,R comme celle du signal S(t), mais dont la restitution débute X intervalles images après l'instant référencé 7. Le signal de lecture T(t) est appliqué aux moyens d'affichage 6 d'un téléviseur muni de la mémoire 1 et des moyens produisant le signal source S(t). La phase de fonctionnement normal est supposée correspondre au maintien de ce décalage de X intervalles images.

D'après ce qui précède, on voit que la mémoire est rafraichie après chaque rotation complète du bras 2. Lorsque le décalage temporel entre la lecture et l'écriture est constant et n'excède pas la période de rafraichissement, on observe sur l'écran du téléviseur un programme retardé, puisque les images ont été émises par la source S avant d'être affichées.

L'utilisateur du téléviseur peut vouloir escamoter un passage du programme, comme celà se produit avec un magnétoscope lorsqu'on agit sur la commande d'avance rapide. Cette commodité connue sous le vocable " Fast Forward " permet de rapprocher dans le temps deux parties de programme séparées par exemple par un spot publicitaire, ce spot étant carrément éliminé si le rapprochement est soudain et si le saut présente l'amplitude appropriée. Cette commodité est illustrée en (b) sur la figure 1 où l'on voit que le bras lecteur 4 a été avancé vers le bras d'écriture 2 pour écourter l'intervalle qui sépare la lecture de l'écriture. L'intervalle passe de X à X' au moment où débutait la lecture de la séquence A,B,C,...,P,Q,R, si bien que les images A à H sont lues à cadence accélérée ou sont purement et simplement escamotées si le passage est instantané, comme supposé sur la figure 1 en (b). Cette seconde phase de fonctionnement illustre un premier aspect de l'invention.

Un second aspect de l'invention consiste à récupérer automatiquement et progressivement les conditions initiales, c'est à dire le retard X, après avoir utilisé la commande " Fast Forward ". On suppose donc que ce qui reste de la séquence A,B,C,....,P,Q,R a été affiché et qu'à l'instant 8, on commence le chargement de la séquence A₁-R₁ On voit en (c) sur la figure 1 que l'on augmente d'une unité le décalage entre la zone chargée et la zone lue. Ceci entraine un redoublement de la lecture de l'image R lequel est immédiatement suivi de la lecture de la séquence A₁-R₁. On constate que le retard de la séquence écrite par rapport à la séquence lue est devenu X" = X' + 1. Lors de la lecture de la séquence A₂-R₂, on procédera au redoublement de l'image R₁ ce qui aura pour effet de porter le retard à X" + 1. Au bout d'un certain temps, on retrouve le retard X, ce qui met fin à la phase de récupération et permet la réutilisation de la commande " Fast Forward ".

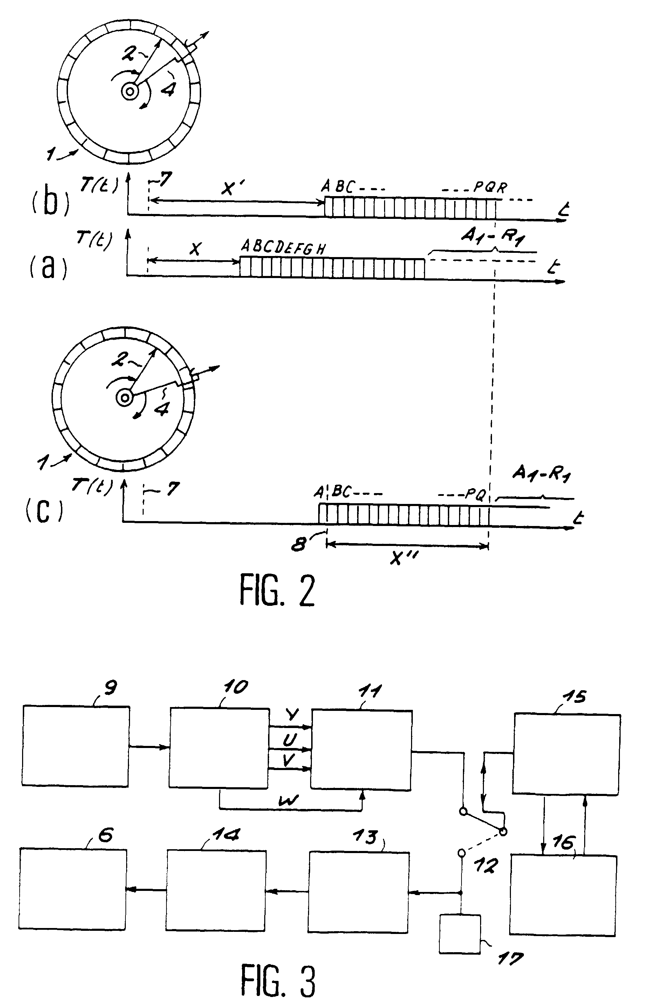

Si l'on part de la situation initiale illustrée en (a) sur la figure 1, on peut souhaiter revoir un passage du programme qui vient juste d'être affiché sur l'écran du téléviseur. Cette commodité, également offerte par les magnétoscopes, correspond à la commande de marche arrière, connue sous le vocable "Instant Replay". On l'obtient avec le système de la figure 1 en augmentant le retard du bras 4 par rapport au bras 2. Ceci constitue un troisième aspect de l'invention qui est illustré par la figure 2.

Sur la figure 2, en (a) on retrouve la situation correspondant à la partie (a) de la figure 1. En (b), sur la figure 2, on voit que le bras de lecture 4 a pivoté dans le sens inverse des aiguilles d'une montre pour venir juste à côté du bras 2. Grâce à ce déplacement, le signal de lecture accuse un retard X plus important. Si ce changement a lieu brusquement lorsqu'on a affiché l'image H, on constate en (b) que l'image suivante est de nouveau A. On est donc en mesure de visualiser une seconde fois le passage comportant les images A à H.

Selon un quatrième aspect de l'invention , après avoir exécuté un "lnstant Replay", il faut revenir progressivement à la situation initiale. Lors d'un deuxième cycle d'écriture débutant à l'instant 8 du détail (c) de la figure 2, on s'arrange pour obtenir un retard de lecture dont la valeur X" est inférieure d'une unité à X'. La différence entre le signal de lecture T(t) représenté en (a) et en (c) réside dans l'escamotage de l'image R, de sorte que la séquence suivante A₁-Q₁ est lue immédiatement après l'image Q. Ce retrait d'une image sera répété cycle après cycle, afin de ramener le retard à sa valeur initiale X.

Si l'on se contente de l'une des deux commandes " Fast Forward " et " Instant Replay ", l'état initial du bras 4 peut être situé juste après, ou juste avant la position de début d'écriture du bras 2. Sur les figures 1 et 2 les deux possibilités ont été prévues, mais on pourrait offrir le choix entre disposer des deux commandes ou n'avoir accès qu'à l'une d'elles avec une amplitude de retard doublée.

Dans la description qui précède, on a indiqué comment coopéraient une source de signal S, une mémoire tampon 1, des circuits de commande 3 et 5 et des moyen d'affichage 6. Ce qui est vrai pour l'image s'applique également au son d'accompagnement qui peut être associé au signal video par échantillonage, quantification et multiplexage temporel. Un téléviseur mettant en oeuvre l'invention est composé des moyens illustrés sur la figure 3.

Les signaux audio-video sont produits par un tuner 9 ou obtenus à partir d'une prise de péritélévision. Un circuit de décodage couleur et son 10 traite ces signaux et délivre des composantes images Y,U,V auxquelles est associé un signal son W. Ces signaux sont appliqués à un convertisseur analogique-numérique 11 qui les quantifie et les multiplexe.Le signal son échantillonné et multiplexé est adressé à une mémoire dédiée en vue du déroulement d'un processus de lecture différée tel que décrit ci-dessus. Les signaux video numériques issus du convertisseur 11 sont envoyés sur l'une des voies d'un commutateur 12 qui les affectent à un circuit encodeur-décodeur 15 qui réalise des opérations de compression et de décompression permettant d'obtenir des débits de 1 à 15 Mbits/s en vue du stockage des images dans une mémoire 16 qui regroupe les moyens 1,3 et 5 précédemment décrits. Cette mémoire peut présenter une capacité extensible obtenue en rajoutant des modules qui se présentent par exemple sous la forme de cartes à puce. L'autre voie du commutateur 12 est reliée d'une part à une mémoire de trame 17 et à l'entrée d'un convertisseur numérique-analogique 13. La sortie du convertisseur 13 est reliée à l'entrée d'un circuit de matriçage RVB 14 qui alimente les moyens d'affichage 6. Dans l'exemple schématisé sur la figure 3, l'encodeur-décodeur 15 est un processeur JPEG-MPEG ( compression intra-image, compatible MPEG ) travaillant en half-duplex à raison de 15 images/s. Le commutateur 12 commute à 30 Hz ou à 25 Hz selon la norme de télévision envisagée. Dans cette réalisation, la mémoire de trame est relue deux fois pour éviter le papillotement. Sans s'écarter du domaine de l'invention, on peut aussi envisager un fonctionnement en full-duplex. Dans ce cas, le schéma de la figure 3 ne comporte plus de commutateur 12 et on utilise sous la référence 15 un simple encodeur. Il faut alors rajouter un décodeur entre la mémoire 16 et le convertisseur numérique-analogique 13.

La mise en oeuvre d'une lecture différée à décalage temporel ajustable, tel qu'elle a été décrite, peut être basée sur une mémoire à semiconducteur comportant par exemple quatre puces de 16 Mbits pour réaliser des sauts temporels de l'ordre de la minute.

Sans s'écarter du domaine de l'invention, on peut envisager d'utiliser une mémoire magnétique comportant par exemple une bande sans fin associée à des têtes d'écriture et de lecture à entrefer. On peut modifier la longueur de bande qui sépare ces têtes pour réaliser les fonctions évoquées ci-dessus, ce qui revient à disposer d'un magnétoscope interne ayant une bande de faible longueur en boucle fermée et un mécanisme de transport de bande particulier. Dans une telle éventualité, il n'est pas nécessaire de numériser l'information à inscrire sur la bande.

On peut aussi envisager de placer dans le récepteur de télévision un enregistreur-lecteur à disque magnéto-optique muni de têtes de lecture et d'écriture indépendantes, afin de positionner la tête de lecture n'importe où à l'intérieur de la plage du disque utilisée par la tête d'écriture pour stocker sous forme binaire une séquence d'images animées. Si l'on adopte un disque à vitesse angulaire constante et un enregistrement d'une image par tour, on peut, par des déplacements radiaux importants, faire varier rapidement le différé de la lecture et moyennant des sauts de piste à piste le ramener le à sa valeur initiale. Un disque dur du genre utilisé en informatique est également envisageable comme mémoire tampon, à condition de prévoir des têtes indépendantes pour l'écriture et la lecture des données.

Pour réaliser une lecture différée portant sur un grand nombre d'images, il est nécessaire d'adopter un codage approprié, afin que la mémoire tampon stocke chaque image sous la forme d'un signal comprimé. L'image restituée après décodage est normalement de qualité inférieure à l'image originale. Il est donc avantageux de réaliser un dispositif à mémoire tampon qui conserve un certain nombre d'images pour revoir un passage de séquence d'images animées, mais qui, en temps normal, n'emprunte pas la voie retardée. Dans cette variante de réalisation, le signal S(t) est directement transmis vers le dispositif d'affichage 6, afin de conserver la meilleure qualité d'image possible. Ce n'est qu'en présence du mode "lnstant Replay" que le dispositif d'affichage est commuté sur la mémoire tampon 1. Dans le mode "Fast Forward", on utilise normalement le contenu de la mémoire tampon, de sorte que la qualité d'image est liée au processus de compression-décompression. L'utilisateur pourra adopter un compromis entre la qualité d'image et l'ampleur du différé grâce à une commande fixant le taux de compression et partant, l'étendue de la zone mémoire affectée à chaque image.

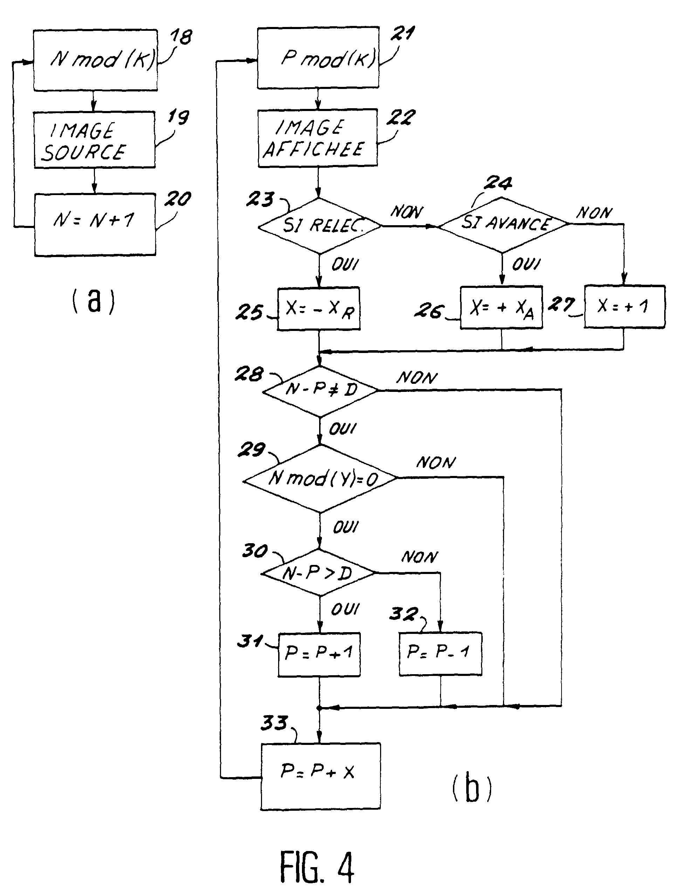

Les organigrammes (a) et (b) de la figure 4 illustrent les principales étapes du processus à mettre en oeuvre pour gérer par microprocesseur la mémoire tampon 1. On a supposé que cette mémoire tampon est capable de stocker K images, le différé se situant initialement à la valeur D qui représente le nombre d'images entre l'adresse d'écriture et l'adresse de lecture; D sera, par exemple, voisin de la demi capacité K/2. La fonction "Instant Replay" pourra porter au maximum sur Q images successives et la fonction "Fast Forward" sur R images successives. Les adresses d'écriture sont obtenues à partir d'une variable N. En (a) sur la figure 4, on voit qu'en partant de la condition initiale N=D et P=O, P étant l'adresse de lecture, on effectue l'opération de la case 18, c'est à dire N modulo(K) pour obtenir l'adresse d'écriture de la première image. La case 19 indique le chargement à cette adresse de l'image source et la case 20 procède à l'incrémentation de N. Parallèlement, le processus illustré en (b) indique le traitement appliqué à l'adresse de lecture. Lorsqu'on est dans les conditions de lecture sans appel aux fonctions " Relecture " ou " Avance rapide ", on effectue le contenu de la case 21, de la case 22, de la case 27 et de la case 33. Cela revient à évaluer l'adresse de lecture, à extraire l'image à cette adresse pour l'afficher et à incrémenter P d'une unité. Les branchements conditionnels 23,24 et 28 se font sur la réponse "NON". L'incrémentation simultanée des adresses d'écriture et de lecture maintient une différence N-P égale à D.

Si l'on commande une relecture, le branchement conditionnel 23 commande l'opération X=-X_{R}, où X est une variable système que l'on retrouve à la case 33. La valeur -X_{R} est au plus égale à Q. L'adresse de lecture est changée dès le prochain cycle du processus, ce qui va engendrer un branchement conditionnel de la case 28 à la case 29 et si la variable N modulo(Y) est nulle, un branchement de 29 à 30 pour exécuter l'opération de la case 31 ou 32 qui incrémente ou décrémente P. Grâce à cette phase de fonctionnement, le changement d'adresse de lecture intervenu va se résorber imperceptiblement à raison d'un décalage d'une image toutes les Y images.

Un fonctionnement du même genre s'applique au cas d'une avance rapide, mais il met en jeu le branchement sur la case 26 qui porte X à la valeur +X_{A} ayant pour limite supérieure R. Le branchement conditionnel 30 sélectionne l'incrémentation ou la décrémentation, afin de résorber le décalage des adresses de lecture et de retrouver un décalage D sans que l'on s'aperçoive de l'insertion ou du retrait d'une image dans la séquence d'images animées.

Il va sans dire que la détermination des adresses d'écriture et de lecture pourrait se faire en logique cablée, notamment au moyen de compteurs d'adresses appropriés.

## Revendications

1. Récepteur de télévision comprenant :
- des moyens d'obtention d'un signal source,
- des moyens d'affichage pour visualiser des images représentatives dudit signal source,
- des moyens internes permettant d'appliquer en différé ledit signal source auxdits moyens d'affichage, ledit différé étant obtenu par l'écriture et la lecture des images dudit signal source dans une mémoire tampon d'une capacité suffisante pour contenir une pluralité desdites images, et
- des moyens pour faire subir audit différé un changement brusque de sa valeur à la demande, suivi par une reprise automatique et progressive de sa valeur initiale pour satisfaire à une demande ultérieure.

2. Récepteur selon la revendication 1, caractérisé en ce que lesdits moyens internes comprennent: un support d'information inscriptible et effaçable, des moyens assurant le défilement dudit support face à une tête d'enregistrement et à une tête de lecture et des moyens de déplacement de ladite tête de lecture, pour modifier sa position dans la plage dudit support explorée par ladite tête d'enregistrement.

3. Récepteur selon la revendication 2, caractérisé en ce que des moyens sont prévus pour numériser ledit signal source préalablement à son inscription sur ledit support.

4. Récepteur selon la revendication 2 ou 3, caractérisé en ce que ladite tête et ledit support forment un système d'écriture-lecture de type magnéto-optique.

5. Récepteur selon l'une quelconque des revendications précédentes, caractérisé en ce que ladite mémoire tampon est une mémoire à accès aléatoire gérée par microprocesseur.

6. Récepteur selon l'une quelconque des revendications précédentes, caractérisé en ce que ladite mémoire tampon est une mémoire à semiconducteur.

7. Récepteur selon la revendication 5 ou 6, caractérisé en ce que ladite mémoire peut être étendue par l'ajout de modules.

8. Procédé de transmission en différé d'une séquence d'images animées dans un récepteur de télévision via une mémoire tampon associée à des moyens d'adressage en écriture et en lecture ladite mémoire tampon ayant une capacité suffisante pour contenir une pluralité d'images de ladite séquence; à la demande au choix, il augmente brusquement la valeur du différé de façon à répéter la lecture d'une portion de ladite séquence, et ensuite il diminue automatiquement et progressivement la valeur du différé pour revenir à sa valeur initiale ; ou bien, il diminue brusquement la valeur du différé de façon à escamoter une portion de ladite séquence par lecture accéléré ou par saut instantané de lecture, et ensuite il augmente automatiquement et progressivement la valeur du différé, par un redoublement de lecture d'une image en cours de lecture après un nombre prédéterminé d'images lues et cela de façon répétitive, pour revenir à sa valeur initiale pour satisfaire à une demande ultérieure.

9. Procédé selon la revendication 8, caractérisé en ce que les signaux représentatifs desdites images sont soumis à un traitement de compression préalablement à leur écriture dans ladite mémoire tampon et en ce que les signaux résultant de la lecture de ladite mémoire tampon subissent un traitement inverse avant d'être appliqués à des moyens d'affichage.

10. Procédé selon la revendication 8 ou 9, caractérisé en ce que l'adressage en écriture de ladite mémoire est incrémenté image par image ainsi que l'adressage en lecture; l'écart entre les adresses d'écriture et de lecture étant modifié de plusieurs unités pour changer la valeur dudit différé dans un sens et ensuite dans le sens inverse, unité par unité, à une cadence sous-multiple de la cadence de lecture desdites images, pour revenir à l'écart initial.

11. Procédé selon l'une quelconque des revendications 8 à 10, caractérisé en ce que le signal source non différé est utilisé dans une phase de fonctionnement normal, tandis que des moyens sont prévus pour lui subsistuer le signal source différé dans une phase transitoire se terminant par la reprise dudit fonctionnement normal.

## Patentansprüche

1. Fernsehempfänger, enthaltend:
- Mittel zum Bilden eines Quellensignals,
- Wiedergabemittel zum Anzeigen von durch das Quellensignal dargestellten Bildern,
- interne Mittel, die ein Anlegen des Quellensignals an die Wiedergabemittel mit Zeitverschiebung ermöglichen, wobei die Zeitverschiebung durch Schreiben und Lesen der Bilder des Quellensignals in einen Pufferspeicher mit einer Kapazität erfolgt, die zur Aufnahme von mehreren der genannten Bilder ausreicht, und
- Mittel, um die Zeitverschiebung auf Anforderung einer abrupten Änderung ihres Wertes zu unterwerfen, gefolgt von einer automatischen und progressiven Wiederaufnahme ihres ursprünglichen Wertes zur Erfüllung einer darauffolgenden Anforderung.

2. Empfänger nach Anspruch 1, dadurch gekennzeichnet, daß die internen Mittel folgendes enthalten: einen einschreibbaren und löschbaren Informationsträger, Mittel, die die Abfrage dieses Trägers durch einen Aufzeichnungskopf und einen Lesekopf ermöglichen, und Mittel zum Versatz des Lesekopfes, um seine Lage in dem Bereich des durch den Aufzeichnungskopf ausgewerteten Trägers zu ändern.

3. Empfänger nach Anspruch 2, dadurch gekennzeichnet, daß Mittel vorgesehen sind, um das Quellensignal vor seinem Einschreiben auf den Träger zu numerieren.

4. Empfänger nach Anspruch 2 oder 3, dadurch gekennzeichnet, daß der Kopf und der Träger ein magneto-optisches Schreib/Lese-System bilden.

5. Empfänger nach einem der vorangehenden Ansprüche, dadurch gekennzeichnet, daß der Pufferspeicher ein durch einen Mikroprozessor gesteuerter Speicher mit Zufallszugriff (RAM) ist.

6. Empfänger nach einem der vorangehenden Ansprüche, dadurch gekennzeichnet, daß der Pufferspeicher ein Halbleiterspeicher ist.

7. Empfänger nach Anspruch 5 oder 6, dadurch gekennzeichnet, daß der Speicher durch zusätzliche Module erweiterbar ist.

8. Verfahren zur Übertragung mit Zeitverschiebung einer Folge von bewegten Bildern in einem Fernsehempfänger mittels eines Pufferspeichers mit Adressiermitteln zum Schreiben und zum Lesen, wobei der Pufferspeicher eine ausreichende Kapazität hat, mehrere Bilder der genannten Folge aufzunehmen, daß er sich bei der Anforderung für die Wahl den Wert der Zeitverschiebung abrupt erhöht, derart, daß das Lesen eines Teiles der genannten Folge wiederholt wird, und er anschließend automatisch und progressiv den Wert der Zeitverschiebung verringert, um auf seinen ursprünglichen Wert zurückzukehren, oder den Wert der Zeitverschiebung abrupt verringert, derart, daß ein Teil der Folge durch ein beschleunigtes Lesen oder einen kurzzeitigen Sprung des Lesens unterdrückt wird, und daß danach der Wert der Zeitverschiebung automatisch und progressiv durch eine Verdoppelung des Lesens eines Bildes im Verlauf des Lesens nach einer vorbestimmten Anzahl an gelesenen Bildern in einer wiederholten Weise vergrößert wird, um an den Anfangswert zurückzukehren und eine darauffolgende Anforderung zu erfüllen.

9. Verfahren nach Anspruch 8, dadurch gekennzeichnet, daß die die Bilder darstellenden Signale vor ihrem Schreiben in den Pufferspeicher einer Komprimierbehandlung unterworfen werden und die sich aus dem Lesen des Pufferspeichers ergebenden Signale einer entgegengesetzten Behandlung unterworfen werden, bevor sie den Wiedergabemitteln zugeführt werden.

10. Verfahren nach Anspruch 8 oder 9, dadurch gekennzeichnet, daß die Adressierung beim Schreiben des Speichers sowie die Adressierung beim Lesen Bild für Bild inkrementiert wird, daß der Versatz zwischen den Schreibadressen und den Leseadressen um mehrere Einheiten geändert wird, um den Wert der Zeitverschiebung Einheit für Einheit auf einem Takt-Bruchteil des Lesetaktes der Bilder in einer Richtung zu ändern und darauffolgend in der entgegengesetzten Richtung zu ändern, um auf den Ausgangszustand zurückzukehren.

11. Verfahren nach einem der Ansprüche 8 bis 10, dadurch gekennzeichnet, daß das nicht-zeitverschobene Quellensignal in einer normalen Phasenfunktion angewendet wird, während Mittel vorgesehen sind, um das zeitverschobene Quellensignal in einer vorübergehenden Phase aufrechtzuerhalten, die durch die Wiederaufnahme des Normalbetriebs endet.

## Claims

1. Television receiver comprising:
- means for obtaining a source signal,
- display means for viewing images representative of said source signal,
- internal means making it possible to defer the application of the said source signal to the said display means, the said deferment being obtained by writing and reading the images of the said source signal to and from a buffer memory of sufficient capacity to contain a plurality of the said images, and
- means for causing the said deferment to undergo an abrupt change of its value on request, followed by automatic and progressive resumption of its initial value so as to satisfy a subsequent request.

2. Receiver according to Claim 1, characterized in that the said internal means comprise: a writeable and erasable information medium, means for causing the said medium to pay out past a recording head and past a reading head and means for displacing the said reading head, so as to modify its position within that region of the said medium which is scanned by the said recording head.

3. Receiver according to Claim 2, characterized in that means are provided for digitizing the said source signal prior to writing it to the said medium.

4. Receiver according to Claim 2 or 3, characterized in that the said head and the said medium form a write/read system of magneto-optical type.

5. Receiver according to any one of the preceding claims, characterized in that the said buffer memory is a random access memory managed by microprocessor.

6. Receiver according to any one of the preceding claims, characterized in that the said buffer memory is a semiconductor memory.

7. Receiver according to Claim 5 or 6, characterized in that the said memory can be extended by adding modules.

8. Process for a deferred transmission of a sequence of moving images in a television receiver via a buffer memory associated with means for write- and read-addressing, the said buffer memory having a sufficient capacity to contain a plurality of images of the said sequence; on request by choice, it abruptly increases the value of the deferment in such a way as to repeat the reading of a portion of the said sequence, and then it automatically and progressively decreases the value of the deferment so as to return to its initial value; or else, it abruptly decreases the value of the deferment in such a way as to skip a portion of the said sequence by accelerated reading or by instantaneous jump in reading, and then it automatically and progressively increases the value of the deferment, by duplicating the reading of an image undergoing reading after a predetermined number of images read, doing so repetitively, so as to return to its initial value so as to satisfy a subsequent request.

9. Process according to Claim 8, characterized in that the signals representative of the said images are subjected to a compression processing prior to their writing to the said buffer memory and in that the signals resulting from the reading of the said buffer memory undergo an inverse processing before being applied to display means.

10. Process according to Claim 8 or 9, characterized in that the write-addressing of the said memory is incremented image by image as is the read-addressing; the disparity between the write- and read-addressing being modified by several units so as to change the value of the said deferment in one direction and then in the inverse direction, unit by unit, at a rate which is a submultiple of the rate of reading of the said images, so as to return to the initial disparity.

11. Process according to any one of Claims 8 to 10, characterized in-that the nondeferred source signal is used in a phase of normal operation, whilst means are provided for substituting it with the deferred source signal in a transient phase ending in the resumption of the said normal operation.
